# EUROPEAN PATENT APPLICATION

(11) **EP 1 000 812 A2**
(43) Date of publication of application: **17.05.2000**
(21) Application number: 99122420.5
(22) Date of filing: 10.11.1999
(51) Int. Cl.: B60R 16/02

(54) **Non-conductor type signal transmission device**

(30) Priority: 12.11.1998 JP 32235798
(71) Applicant: ALPS ELECTRIC CO., LTD., Ota-ku Tokyo 145 (JP)
(72) Inventor: Masudaya, Hideki, Furukawa-shi, Miyagi-ken (JP)
(74) Representative: Hirsch, Peter

(57) **Abstract**

A predetermined air gap (G) is secured between a stator side core (2) attached to a steering column (1) side and a rotor side core (7) attached to a steering wheel (5) side and a plurality of stator side coils (3) and a plurality of rotor side coils (8) are disposed concentrically to both the cores (2) and (7), respectively. A stator side core (3) and a rotor side core (8), which are in confrontation with each other, is arranged as a pair and various types of signals such as an airbag signal, switch ON/OFF signals and the like are transmitted and received using the alternating currents flowing to the plurality of coil pairs as carriers as well as all the frequencies of the alternating currents flowing to the respective coil pairs are made different from each other. With this arrangement, there is provided a noncontact type signal transmission device capable of simply transmitting and receiving a plurality of signals between the steering wheel (5) and the steering column (1) and further enhancing the reliability of transmission and reception by suppressing the deterioration of crosstalk.

## Description

### BACKGRTOUND OF THE INVENTION

### 1. Field of the Invention

The present invention relates to a signal transmission device for transmitting a signal between the steering wheel side of an automobile and the steering column side thereof, and more specifically, the present invention relates to a non-contact type signal transmission device for transmitting a signal using a rotary transformer in a non-contact fashion.

### 2. Description of the Related Art

When an airbag inflator and electric parts such as switches and the like are mounted on the steering wheel of an automobile, a signal transmission device is interposed between the steering wheel and a steering column and an airbag signal to an airbag inflator and ON/OFF signals from the switches must be transmitted through the signal transmission device. Ordinarily, a rotary connector composed of a spirally-wound strip-shaped flat cable and a slip ring is used as the signal transmission device. However, the former rotary connector has a problem that its cost is increased by an expensive flat cable required by it and the latter slip ring has a problem in the reliability of connection because it is of a contact type using a slide brush.

To solve the above problems, there is conventionally disclosed a non-contact type signal transmission device for transmitting a signal using a rotary transformer in a non-contact fashion in European Patent EP 680060 A1. The non-contact type signal transmission device is arranged such that a rotor side core and a stator side core, which are components of a rotary transformer, are formed to have a U-shaped cross section, respectively, both the cores are reversed and combined in an axial direction as well as a primary coil and a secondary coil are wound on the confronting inner surfaces of both the cores through a predetermined air gap.

In the non-contact type signal transmission device arranged as described above, when an A.C. voltage having a predetermined frequency is input to the primary coil, it is magnetically coupled by the primary coil and the secondary coil and output from the secondary coil as a secondary current frequency. Therefore, when, for example, an airbag signal is to be transmitted from a steering column side to a steering wheel side, an A.C. voltage having a predetermined frequency is input to the primary coil disposed to the stator side core and the secondary current frequency output from the secondary coil disposed to the rotor side core is connected to an airbag inflator, whereby the airbag signal can be transmitted using the A.C. voltage as a carrier.

According to the aforesaid conventional non-contact type signal transmission device, since a signal is transmitted between the steering wheel and the steering column by non-contact electromagnetic coupling using the rotary transformer, there are such advantages that the structure of the device is simplified, the cost thereof is reduced, and the reliability thereof is maintained for a long time. However, since the rotary transformer includes only one pair of the primary coil and the secondary coil, the following problems arise in the device. That is, when a signal (for example, an airbag signal) is transmitted from the stator to the rotor and a signal (for example, a cruise control signal) is transmitted from the rotor to the stator using the coil pair, both the signals cannot be simultaneously transmitted and a circuit arrangement is made complex. In particular, these problems recently have become remarkable because there is a tendency that the number of switches and the like mounted on the steering wheel is increased and the number of the types of signals transmitted between the steering wheel and the steering column are also increased thereby.

To cope with the above problems, it is contemplated to transmit and receive a plurality of signals using a plurality of coil pairs. When a rotary transformer is assembled to the steering apparatus of an automobile, however, there arises a new problem in that leakage flux is liable to travels up to an adjacent coil pair and an amount of crosstalk is increased thereby because it is difficult to strictly manage an air gap between a primary coil and a secondary coil.

### SUMMARY OF THE INVENTION

In the present invention, a plurality of coil pairs, which are in confrontation with each other through an air gap, are disposed to the rotor member and the stator member of a rotary transformer and the frequency of the alternate current flowing to at least one coil pair is made different from the frequencies of the alternating currents flowing to the other coils. With this arrangement, even if the air gap is increased, crosstalk is not deteriorated so that reliability can be enhanced.

### BRIEF DESCRIPTION OF THE DRAWINGS

FIG. 1 is a sectional view of the main portion of a non-contact type signal transmission device.

FIG. 2 is a front elevational view of a steering wheel.

FIG. 3 is a circuit diagram of the non-contact type signal transmission device.

### DESCRIPTION OF THE PREFERRED EMBODIMENT

A non-contact type signal transmission device of the present invention comprises a rotor member rotating in association with the steering wheel of an automobile, a plurality of rotor side coils disposed concentrically to the rotor member, a stator member disposed in confrontation with the rotor member through an air gap and a plurality of stator side coils disposed concentrically to the stator member, wherein a plurality of signals are transmitted and received between the rotor member and the stator member using the alternating currents flowing to the plurality of coil pairs composed of the rotor side coils and stator side coils which are in confrontation with each other as carriers as well as the frequency of the alternating current flowing to at least one coil pair is made different from the frequencies of the alternating currents flowing to the other coil pairs.

With this arrangement, a plurality of signals can be simply transmitted and received between the steering wheel and the steering column and moreover the reliability of transmission and reception can be enhanced by suppressing the deterioration of crosstalk.

In the above arrangement, the types of signals to be transmitted and received are not limited. However, when one of the plurality of signals is an airbag signal, if the frequency of the alternating current flowing to a coil pair which transmits and receives the airbag signal is made different from the frequencies of the alternating currents flowing to the other coil pairs, an amount of crosstalk between the airbag signal, to which high reliability is required, and the other signals can be reduced.

When the number of coil pairs is set to at least three sets, if the frequency of the alternating current flowing to at least one of the respective coil pairs is different, it is not always necessary that the frequencies of the alternating currents flowing to the other coils are different. However, when all the frequencies of the alternating currents flowing to the respective coil pairs are made different, an amount of crosstalk between the respective signals is reduced, whereby the reliability of transmission and reception can be more enhanced.

### Example

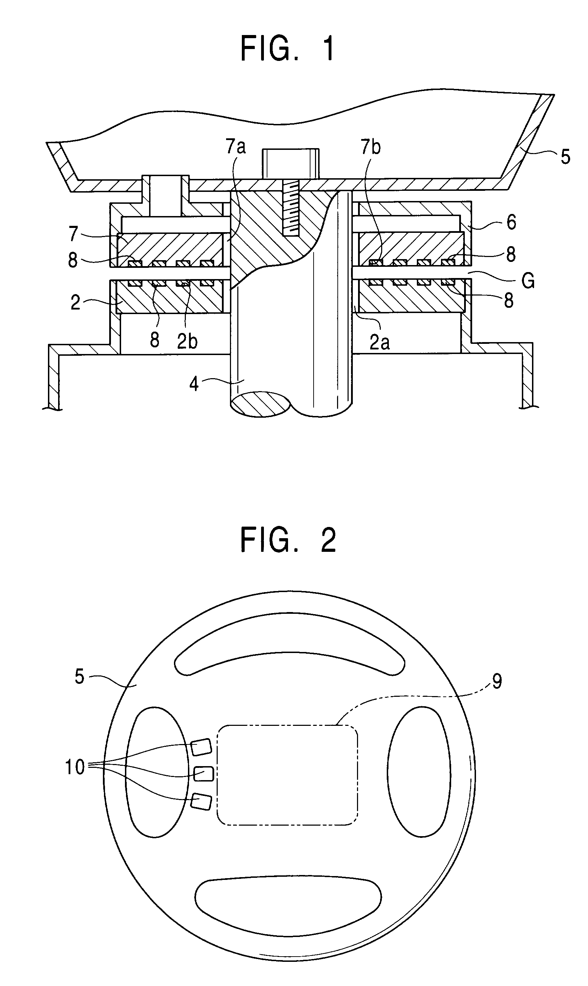

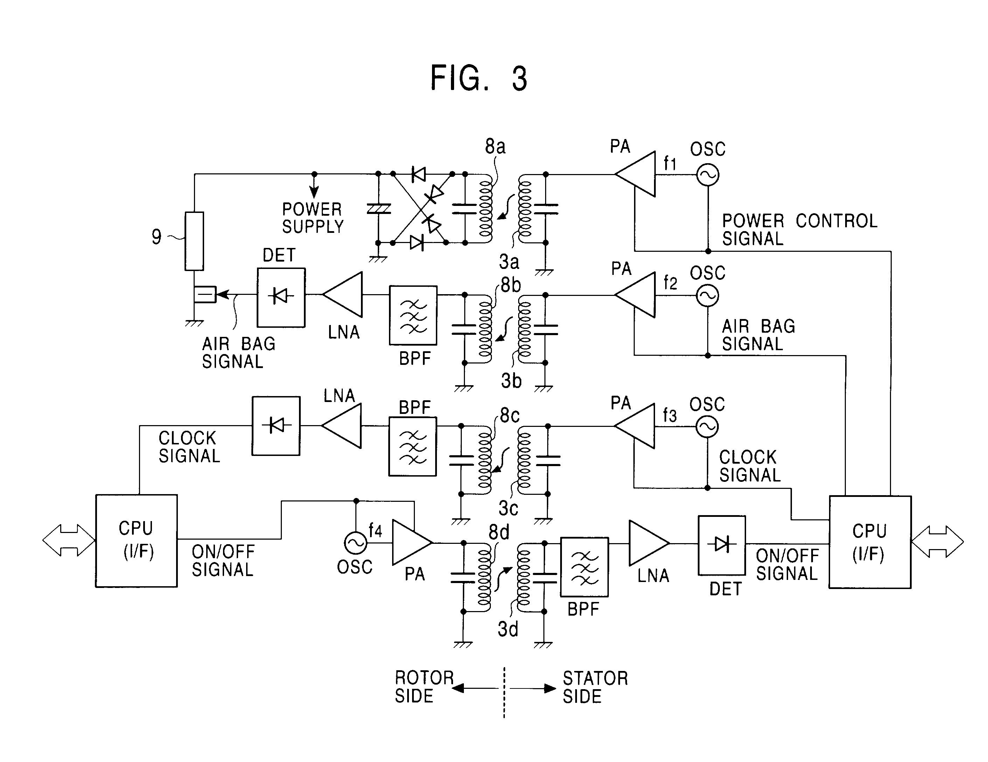

To describe an example with reference to figures, Fig. 1 is a sectional view of the main portion of a non-contact type signal transmission device, Fig. 2 is a front elevational view of a steering wheel and Fig. 3 is a circuit diagram of the non-contact type signal transmission device.

As shown in Fig. 1, a stator side core 2 composed of a ferromagnetic ferrite material is attached to the steering column 1 of a steering apparatus and four grooves 2b are concentrically formed on the upper surface of the stator side core 2 about a center hole 2a. Stator side coils 3, each of which is wound a predetermined number of turns, are accommodated in the grooves 2b, respectively, and a steering shaft 4 is inserted into the center hole 2a. A steering wheel 5 is fixed at the upper end of the steering shaft 4 and a wheel cover 6 is attached to the lower surface of the steering wheel 5. A rotor side core 7 composed of a ferromagnetic ferrite material is attached to the lower end of the wheel cover 6. The lower surface of the rotor side core 7 confronts the upper surface of the stator side core 2 through a predetermined (2 - 3 mm) air gap G. Four grooves 7b are concentrically formed on the lower surface of the rotor side core 7 about a center hole 7a, and rotor side coil 8, each of which is wound a predetermined number of turns, are accommodated in the grooves 7b, respectively. The respective stator side coils 3 confront the respective rotor side coils 8 through the air gap G and a rotary transformer is composed of the stator side core 2, the rotor side core 7 and the respective coil pairs 3 and 8.

As shown in Fig. 2, an airbag inflator 9 is accommodated in the steering wheel 5 at the center thereof. When an automobile collides, the airbag inflator 9 is exploded in response to an airbag signal, which will be described later, and expands an airbag. Further, three sets, for example, of switches 10 are disposed at predetermined locations of the steering wheel 5 and used for the change of an amount of air from an air conditioner, the selection of a menu of audio equipment, and the like. The switches output ON-signals by being depressed by a driver.

When the four stator side coils 3 disposed to the stator side (the steering column 1 side) of the steering apparatus are denoted by numerals 3a - 3d as shown in Fig. 3, the three stator side coils 3a - 3c are connected to a CPU (or an I/F) through PAs (amplifiers) and OSCs (oscillators) and the remaining stator side coil 3d is connected to the CPU through a BPF (band-pass filter), a LNA (low noise amplifier) and a DEP (detector). A.C. voltages having frequencies f1, f2 and f3 are input to the stator side coils 3a - 3c from the OSCs, respectively and a power control signal, an air bag signal and a clock signal are transmitted to the rotor side coils 8 which correspond thereto, respectively from the CPU using the alternating currents as carriers. In the example, since the frequency fl of the alternating current for carrying the power control signal is set to a low frequency of 20 KHz taking unnecessary radiation into consideration in order to transmit high power, the frequency f2 of the alternating current for carrying the airbag signal is set to 5.5 MHz and the frequency f3 of the alternating current for carrying the clock signal is set to 3.58 MHz. In contrast, when the four rotor side coils 8 disposed to the rotor (steering wheel 5) side of the steeling apparatus are denoted by numerals 8a - 8d, the rotor side coil 8a confronting the stator side coil 3a is connected to the power supply unit of the airbag inflator 9 through a rectifier such as a diode bridge or the like, the rotor side coil 8b confronting the stator side coil 3b is connected to the switch unit of the airbag inflator 9 through a BPF, a LNA and a DET and the rotor side coil 8c confronting the stator side coil 3c is connected to a CPU (or I/F) through a BPF, a LNA and a DET. Further, the rotor side coil 8d confronting the stator side coil 3d is connected to the CPU through a PA and an OSC, and an alternating current having a frequency f4 is input to the rotor side coil 8d from the OSC. In the example, the frequency f4 is set to 4.5 MHz and the ON/OFF signals of the respective switches 10 captured by the CPU are transmitted to the corresponding stator side coil 3d using the alternating current as a carrier.

In the above arrangement, even if the steering wheel 5 is turned in any of a right direction and a left direction, the movable member of the rotary transformer is rotated with respect to the fixed member thereof in association with the rotation of the steering wheel 5, whereby the rotor side coils 8a - 8d and the stator side coils 3a - 3d, which are paired with each other, are kept in a non-contact electromagnetically-coupled state, and respective signals are transmitted and received between the stator side of the steering apparatus and the rotor side thereof.

For example, as to the power control signal, the alternating current having the frequency fl (20 KHz), which is created by the OSC, is electromagnetically coupled by the stator side coil 3a and the rotor side coil 8a, the alternating current supplied from the rotor side coil 8a is rectified by the diode bridge or the like, charged to an electrolytic capacitor or the like and used as a power supply for the airbag inflator 9 mounted on the steering wheel 5 and other circuit parts. Further, as to the airbag signal, the alternating current having the frequency f2 (5.5 MHz), which is created by the OSC, is electromagnetically coupled by the stator side coil 3b and the rotor side coil 8b, the alternating current supplied from the rotor side coil 8b is input to the switch unit of the airbag inflator 9 through the BPF, the LNA and the DET, whereby, when a collision sensor operates, the airbag inflator 9 can be exploded by multiplying the operating signal from the collision sensor with the airbag signal. Similarly, as to the clock signal, the alternating current having the frequency f3 (3.58 MHz), which is created by the OSC, is electromagnetically coupled by the stator side coil 3c and the rotor side coil 8c and the alternating current supplied from the rotor side coil 8c can be supplied to the rotor side CPU through the BPF, the LNA and the DET. In addition, as to the ON/OFF signals of the respective switches 10 mounted on the steering wheel 5, the alternating current having the frequency f4 (4.5 MHz), which is created by the OSC, is time-divisionally multiplexed using the above clock signal and electromagnetically coupled by the rotor side coil 8d and the stator side coil 3d, whereby the alternating current supplied from the stator side coil 3d can be transmitted to the stator side CPU through the BPF, the LNA and the DET.

At the time, all the frequencies fl - f4 of the alternating currents flowing to the rotor side coils 8a - 8d and the stator side coils 3a - 3d, which are paired with each other, are made different from each other, the leakage flux caused to the respective coil pairs is difficult to travel up to an adjacent coil pair. Accordingly, an amount of crosstalk of respective signals which are transmitted and received using the alternating currents as carriers is reduced, whereby the reliability of transmission and reception can be increased.

Note that it is needless to say that the number of the coil pairs of the rotor side and the stator side and the types of the signals transmitted and received are not limited by the example.

The present invention is embodied by the fashion mentioned above and has the following advantages.

The non-contact magnetic-coupling type rotary transformer is used as the transmission device for transmitting and receiving signals between the steering wheel of an automobile and the steering column thereof, the plurality of coil pairs, which are in confrontation with each other through the air gap, are disposed to the rotor member and the stator member of the rotary transformer as well as the frequency of the alternating current flowing to at least one coil pair is made different from the frequencies of the alternating currents flowing to the other coil pairs. With this arrangement, a plurality of signals can be easily transmitted and received between the steering wheel and the steering column. Moreover, the reliability of transmission and reception can be enhanced by suppressing the deterioration of crosstalk.

## Claims

1. A non-contact type signal transmission device, characterized by comprising a rotor member (7) rotating in association with the steering wheel (5) of an automobile, a plurality of rotor side coils (8, 8a, 8b, 8c, 8d) disposed concentrically to the rotor member (7), a stator member (2) disposed in confrontation with the rotor member (7) through an air gap (G) and a plurality of stator side coils (3, 3a, 3b, 3c, 3d) disposed concentrically to the stator member (2),
wherein a plurality of signals are transmitted and received between the rotor member (7) and the stator member (2) using the alternating currents flowing to the plurality of coil pairs (3, 8; 3a, 8a; 3b, 8b; 3c, 8c; 3d, 8d) composed of the rotor side coils (8, 8a, 8b, 8c, 8d) and stator side coils (3, 3a, 3b, 3c, 3d) which are in confrontation with each other as carriers as well as the frequency (f1, f2, f3) of the alternating current flowing to at least one coil pair (3, 8; 3a, 8a; 3b, 8b; 3c, 8c; 3d, 8d) is made different from the frequencies (f1, f2, f3, f4) of the alternating currents flowing to the other coil pairs (3, 8; 3a, 8a; 3b, 8b; 3c, 8c; 3d, 8d).

2. The non-contact type signal transmission device according to claim 1, wherein the plurality of signals include an airbag signal and the frequency (f2) of the alternating current flowing to a coil pair (3b, 8b) transmitting and receiving the airbag signal is made different from the frequencies (f1, f2, f3, f4) of the alternating currents flowing to the other coil pairs (3a, 8a; 3c, 8c; 3d, 8d).

3. The non-contact type signal transmission device according to claim 1 or 2, wherein the coil pairs (3, 8; 3a, 8a; 3b, 8b; 3c, 8c; 3d, 8d) are provided in the number of at least three sets and all the frequencies (3, 8; 3a, 8a; 3b, 8b; 3c, 8c; 3d, 8d) of the alternating currents flowing to the coil pairs are made different from each other.

4. The non-contact type signal transmission device according to claim 2 or 3, wherein the frequency (f2) of the alternating current flowing to the coil pair (3b, 8b) for transmitting and receiving the airbag signal is set larger than the frequencies (f1, f3, f4) of the alternating currents flowing to the other coil pairs (3a, 8a; 3c, 8c; 3d, 8d).

5. The non-contact type signal transmission device according to any of claims 1 to 4, wherein the plurality of signals include a power control signal and the frequency (f1) of the alternating current flowing to the coil pair (3a, 8a) for transmitting and receiving the power control signal is made different from the frequencies (f2, f3, f4) of the alternating currents flowing to the other coil pairs (3b, 8b; 3c, 8c; 3d, 8d).

6. The non-contact type signal transmission device according to claim 5, wherein the frequency (f1) of the alternating current flowing to the coil pair (3a, 8a) for transmitting and receiving the power control signal is set smaller than the frequencies (f2, f3, f4) of the alternating currents flowing to the other coil pairs (3b, 8b; 3c, 8c; 3d, 8d).

7. The non-contact type signal transmission device according to claim 1, wherein the plurality of signals include an airbag signal and a power control signal and the frequency (f2) of the alternating current flowing to the coil pair (3b, 8b) for transmitting and receiving the airbag signal and the frequency (f1) of the alternating current flowing to the coil pair (3a, 8a) for transmitting and receiving the power control signal are made different from the frequencies (f3, f4) of the alternating currents flowing to the other coil pairs (3c, 8c; 3d, 8d).

8. The non-contact type signal transmission device according to claim 7, wherein the frequency (f2) of the alternating current flowing to the coil pair (3b, 8b) for transmitting and receiving the airbag signal is set larger than the frequencies (f1, f3, f4) of the alternating currents flowing to the other coil pairs (3a, 8a; 3c, 8c; 3d, 8d) and the frequency (f1) of the alternating current flowing to the coil pair (3a, 8a) for transmitting and receiving the power control signal is set smaller than the frequencies (f2, f3, f4) of the alternating currents flowing to the other coil pairs (3b, 8b; 3c, 8c; 3d, 8d).

9. A non-contact type signal transmission device, characterized by comprising a rotor member (7) rotating in association with the steering wheel (5) of an automobile, a plurality of rotor side coils (8, 8a, 8b, 8c, 8d) disposed concentrically to the rotor member (7), a stator member (2) disposed in confrontation with the rotor member (7) through an air gap (G) and a plurality of stator side coils (3, 3a, 3b, 3c, 3d) disposed concentrically to the stator member (2),
wherein a plurality of signals are transmitted and received between the rotor member (7) and the stator member (2) using the alternating currents flowing to the plurality of coil pairs (3, 8; 3a, 8a; 3b, 8b; 3c, 8c; 3d, 8d) composed of the rotor side coils (8, 8a, 8b, 8c, 8d) and stator side coils (3, 3a, 3b, 3c, 3d) which are in confrontation with each other as carriers as well as the frequency (f2) of the alternating current flowing to the coil pair (3b, 8b) for transmitting and receiving an airbag signal of the plurality of signals is made different from the frequencies (f1, f3, f4) of the alternating currents flowing to the other coil pairs (3a, 8a; 3c, 8c; 3d, 8d).

10. The non-contact type signal transmission device according to claim 9, wherein the frequency (f2) of the alternating current flowing to the coil pair (3b, 8b) for transmitting and receiving the airbag signal is set larger than the frequencies (f1, f3, f4) of the alternating currents flowing to the other coil pairs (3a, 8a; 3c, 8c; 3d, 8d).

11. The non-contact type signal transmission device according to claim 10, wherein the plurality of signals include a power control signal and the frequency (f1) of the alternating current flowing to the coil pair (3a, 8a) for transmitting and receiving the power control signal is set smaller than the frequencies (f2, f3, f4) of the alternating currents flowing to the other coil pairs (3b, 8b; 3c, 8c; 3d, 8d).

12. The non-contact type signal transmission device according to claim 9, wherein the plurality of signals include a power control signal and the frequency (f1) of the alternating current flowing to the coil pair (3a, 8a) for transmitting and receiving the power control signal is made different from the frequencies (f2, f3, f4) of the alternating currents flowing to the other coil pairs (3b, 8b; 3c, 8c; 3d, 8d).

13. The non-contact type signal transmission device according to claim 12, wherein the frequency (f1) of the alternating current flowing to the coil pair (3a, 8a) for transmitting and receiving the power control signal is set smaller than the frequencies (f2, f3, f4) of the alternating currents flowing to the other coil pairs (3b, 8b; 3c, 8c; 3d, 8d).

14. The non-contact type signal transmission device according to any of claims 9 to 13, wherein the coil pairs (3,8; 3a, 8a; 3b, 8b; 3c, 8c; 3d, 8d) are provided in the number of at least three sets.

15. The non-contact type signal transmission device according to claim 14, wherein all the frequencies (f1, f2, f3, f4) of the alternating currents flowing to the coil pairs (3, 8; 3a, 8a; 3b, 8b; 3c, 8c; 3d, 8d) are made different from each other.

16. The non-contact type signal transmission device according to claim 15, wherein the coil pairs (3, 8; 3a, 8a; 3b, 8b; 3c, 8c; 3d, 8d) are provided in the number of four sets and signals transmitted by the respective coil pairs (3, 8; 3a, 8a; 3b, 8b; 3c, 8c; 3d, 8d) are an airbag signal, a power control signal, a clock signal and the ON/OFF signals of the respective switches mounted on the steering wheel (5).
